# EUROPEAN PATENT SPECIFICATION

(11) **EP 2 474 762 B1**
(45) Date of publication and mention of the grant of the patent: **19.03.2014**
(21) Application number: 12150355.1
(22) Date of filing: 06.01.2012
(51) Int. Cl.: F16J 15/44, F01D 11/02

(54) **Elliptical sealing system**
Elliptisches Abdichtsystem
Système d'étanchéité elliptique

(30) Priority: 07.01.2011 US 986226
(43) Date of publication of application: 11.07.2012
(73) Proprietor: General Electric Company, Schenectady, NY 12345 (US)
(72) Inventor: Lusted, Roderick Mark, Niskayuna, NY New York 12309 (US); Ghasripoor, Farshad, Niskayuna, NY New York 12309 (US); Brisson, Bruce William, Niskayuna, NY New York 12309 (US); Sarri, Franco, 50018 Firenze (IT)
(74) Representative: Illingworth-Law, William Illingworth

(56) References cited:
- US-A1- 2007 132 193

## Description

### TECHNICAL FIELD

The present application relates generally to seals for use with rotary machines and more particularly relates to a compliant and an abradable labyrinth sealing system having an elliptical shape for use with a rotary machine such as a rotary compressor and the like.

### BACKGROUND OF THE INVENTION

In a rotary machine, one or more seal generally extend along an interface between the rotating and the stationary components. For example, compressors, turbines, and the like may have one or more seals at the interface between a series of rotating blades or buckets disposed within a casing or a vane. These seals are intended to preserve a pressure differential across the rotating components between upstream and downstream sides thereof. A smaller clearance dimension at the seal generally increases the performance of the seal and the efficiency of the overall rotary machine by limiting the leakage thereacross.

US 2007/0132193 A1 discloses a sealing system to be disposed between a rotor and a stator housing. The sealing system includes a radially movable sealing element, eg an I-shaped packing ring disposed in a slot formed in the stator housing. The packing ring includes an abradable coating provided on a substrate. A plurality of biasing members such as springs are disposed between the packing ring and the stator housing.

The seals and the components thereof, however, may be subject to relatively high temperatures, thermal gradients, and thermal expansion and contraction during various operational stages of the rotary machine such as during start-up and during other types of transient operations. Typically, the seal includes an extra clearance dimension to reduce the likelihood of contact and damage between the rotating and the stationary components during such transient operations. This extra clearance dimension, however, also may reduce the performance and efficiency of the seal and the overall rotary machine because of the leakage flow across the seal. Fluid leakage between the rotor and the casing may lower the efficiency of the compressor and hence lead to increased fuel costs.

There is thus a desire for an improved sealing system for a rotary machine such as a compressor and the like that reduces leakage therethrough while maintaining adequate clearance during transient operations as well as during steady state operating conditions. Such reduced leakage should improved overall efficiency while preventing damage to the components herein.

### SUMMARY OF THE INVENTION

The present application provides an elliptical sealing system for use with a rotor and a stator housing of a rotary machine. The elliptical sealing system includes a number of sealing segments with an abradable coating thereon. The sealing segments with the abradable coating thereon have a substantially elliptical shape. A plurality of biasing members are in communication with the sealing segments and the stator housing.

These and other features and improvements of the present application will become apparent to one of ordinary skill in the art upon review of the following detailed description when taken in conjunction with the several drawings and the appended claims.

### BRIEF DESCRIPTION OF THE DRAWINGS

Fig. 1 is a schematic view of a gas turbine engine.
Fig. 2 is a cross-sectional view of an elliptical sealing system as may be described herein positioned within a rotary machine.
Fig. 3 is an axial view of the elliptical sealing system of Fig. 2 positioned about a rotor of the rotary machine.

### DETAILED DESCRIPTION

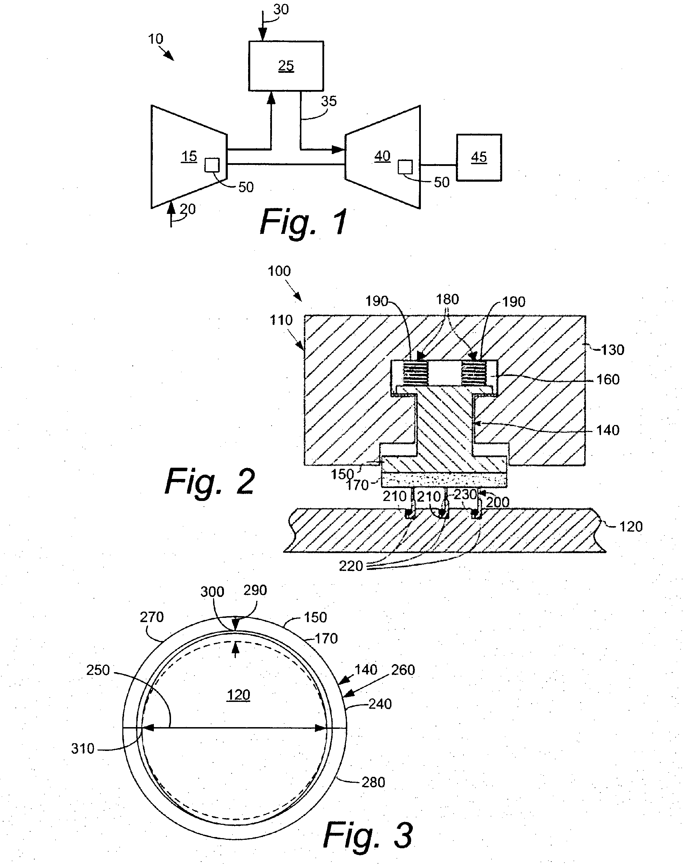

Referring now to the drawings, in which like numerals refer to like elements throughout the several views, Fig. 1 shows a schematic view of a rotary machine such as gas turbine engine 10. The gas turbine engine 10 may include a compressor 15. The compressor 15 compresses an incoming flow of air 20. The compressor 15 delivers the compressed flow of air 20 to a combustor 25. The combustor 25 mixes the compressed flow of air 20 with a compressed flow of fuel 30 and ignites the mixture to create a flow of combustion gases 35. Although only a single combustor 25 is shown, the gas turbine engine 10 may include any number of combustors 25. The flow of combustion gases 35 is delivered in turn to a turbine 40. The flow of combustion gases 35 drives the turbine 40 so as to produce mechanical work. The mechanical work produced in the turbine 40 drives the compressor 15 and an external load 45 such as an electrical generator and the like.

The gas turbine engine 10 may use natural gas, various types of syngas, and/or other types of fuels. The gas turbine engine 10 may be one of any number of different gas turbine engines offered by General Electric Company of Schenectady, New York and the like. The gas turbine engine 10 may have other configurations and may use other types of components. Other types of gas turbine engines also may be used herein. Multiple gas turbine engines 10, other types of turbines, and other types of power generation equipment also may be used herein together. Other types of rotary machines also may be used herein.

Gas leakage out of the gas path or into the gas path of the gas turbine engine 10 from an area of higher pressure to an area of lower pressure generally is undesirable. As described above, gas path leakage in the compressor 15 and/or in the turbine 40 may lower the efficiency of the overall gas turbine engine 10 and lead to increased fuel costs. The gas turbine engine 10 therefore may include a sealing system 50 provided in the compressor 15 and/or the turbine 40. The sealing system 50 facilitates a minimum clearance between the stationary components and the rotating components therein. As a result, fluid leakage through these components may be minimized so as to enhance overall efficiency.

Fig. 2 shows a portion of rotary machine 100 as may be described herein. In this example, the rotary machine 100 may include a compressor 110 similar to compressor 15 described above. Generally described, the compressor 110 includes a rotor 120 disposed inside a stator housing 130. The rotor 120 may be coupled to an input device shaft (not shown) or otherwise. Likewise, the stator housing 130 may include a number of suction ports and discharge ports (not shown) communicating fluid to and from the rotor 120 and the components thereof or otherwise. During rotation of the rotor 120, an incoming fluid may be sucked through the suction ports and a compressed fluid may be discharged through the discharge ports. Other configurations and other components may be used herein.

An elliptical sealing system 140 may be positioned between the rotor 120 and the stator housing 130. The elliptical sealing system 140 may be configured to control the leakage of the fluid therethrough without damaging the components thereof. Although described herein in the context of the compressor 110, the elliptical sealing system 140 may be used with any type of rotary machine 100, including steam turbines, gas turbines, and the like.

The elliptical sealing system 140 may include a retractable packing ring 150 positioned within a slot 160 of the stator housing 130. The packing ring 150 may be generally I-shaped although other configurations may be used herein. The packing ring 150 may include an abradable coating 170 facing the rotor 120. The abradable coating 170 may include an alloy of cobalt, nickel, chromium, aluminum, yttrium, hexagonal boron nitride, and polymers such as polyesters, polyimides, or the like. Alternatively, the abradable coating 170 may include nickel, chromium, aluminum, and clay (bentonite). Further, the abradable coating 170 may include nickel, graphite, and stainless steel. Further, the abradable coating 170 may include nickel, chromium, iron, aluminum, boron and nitrogen. Further, the abradable coating 170 may also include non-metallic materials (e.g., polytetrafluoroethylene applied by electrostatic powder coating process or polytetrafluoroethylene filled synthetic mica which may be attached by a mechanical device). The abradable coating 170 may use any desired material in any desired size, shape, and/or orientation.

A number of biasing members 180 such as springs 190 may be disposed between the packing ring 150 and the stator housing 130. The biasing members 180 may include leaf springs, coil springs, helical springs, hydraulic springs, pneumatic springs, stacked washers, and the like. The biasing members 180 may be configured to bias the packing ring 150 towards the rotor 120. In this example, the biasing members 180 may be positioned at about a 12 o'clock position and about a 6 o'clock position. Other positions may be used herein. Any number or type of biasing members 180 may be used herein. Other configurations and other components may be used herein.

The rotor 120 also may include a number of teeth 200 extending towards the elliptical sealing system 140. The teeth 200 may be in the form of a number of "J"-type strips 210 positioned within a number of slots 220 on the rotor 120. The J-strips 210 may be held in place within the rotor slots 220 via a number of wires 230 or other types of connection means. The J-strips 210 may be made out of stainless steel or other types of substantially rigid materials. Some or all of the J-strips 210 may be in contact with the abradable coating 170 of the rotor 120. The J-strips 210 may be detachable from the rotor 120 for replacement if damaged or worn via contact with the abradable coating 170. Other configurations and other components may be used herein.

Fig. 3 shows an axial view of the elliptical sealing system 140. As is shown, the elliptical sealing system 140 may have a largely elliptical shape 240. Specifically, the packing ring 150 with the abradable coating 170 may largely form the elliptical shape 240. By use of the term "elliptical", we also include various types of hyperboloid, parabaloid, and other types of similar shapes. Other configurations may be used herein. The elliptical sealing system 140 is shown as positioned about the rotor 120. A horizontal arrow 250 shows the seal major axis that is substantially equal to the outside diameter of the rotor 120 and the extended teeth 200 or the J-strips 210. Other configurations may be used herein.

The elliptical sealing system 140 also may have a number of segments 260. In this example the elliptical sealing system 140 may have only two (2) segments 260, a first half 270 and a second half 280. Any number of segments 260 may be used herein. By only using the two (2) halves 270, 280, no additional end gap leakage may be introduced through the elliptical sealing system 140. Likewise, the use of the biasing members 180 at about the 12 o'clock position (shown at vertical arrows 290) and about at the 6 o'clock position generally forces the halves 270, 280 towards the center and the rotor 120 for contact therewith. Operating pressures also may provide additional sealing force.

The use of the elliptical shape 240 allows for an interference engagement 300 between the abradable coating 170 of the elliptical sealing system 140 and the J-strips 210 of the rotor 120. Specifically, the biasing members 180 allow for a deeper interference engagement 300 at about the 6 o'clock position and about the 12 o'clock position while providing for a line on line engagement 310 at about the 3 o'clock and about the 9 o'clock position. The sealing system 140 thus acts as a wheel eye seal with improved radial engagement. Likewise, no additional end gap leakage may be introduced through the elliptical sealing system 140 given the use of a minimum number of segments 260, the first half 270 and the second half 280. Such reduced leakage flows therethrough should increase overall compressor and rotary machine efficiency through the combination herein of the elliptical shape 240, the biasing members 180, and/or the abradable coating 170.

It should be apparent that the foregoing relates only to certain embodiments of the present application and that numerous changes and modifications may be made herein by one of ordinary skill in the art without departing from the scope of the invention as defined by the following claims.

## Claims

1. An elliptical sealing system (140) for use with a rotor (120) and a stator housing (130) of a rotary machine (100), comprising:
a plurality of sealing segments (260);
a plurality of biasing members (180) in communication with the plurality of sealing segments (260) and in use, with the stator housing (130).
each of said plurality of sealing segments (260) comprising an abradable coating (170) thereon; **characterised in that**
said plurality of sealing segments (260) with the abradable coating (170) thereon comprise a substantially elliptical shape (240).

2. The elliptical sealing system (140) of claim 1, wherein the plurality of sealing segments (260) comprises a packing ring (150).

3. The elliptical sealing system (140) of claim 1 or claim 2, wherein the plurality of sealing segments (260) comprises a first half (270) and a second half (280).

4. The elliptical sealing system (140) of any preceding claim, wherein the rotor (120) comprises a plurality of teeth (200) thereon and wherein in use the plurality of teeth (200) engage the abradable coating (170) of the plurality of sealing segments (260).

5. The elliptical sealing system (140) of any preceding claim, wherein the plurality of teeth (200) comprise a plurality of J-strips (210) and wherein the plurality of J-strips (210) in use engage the abradable coating (170) of the plurality of sealing segments (260).

6. The elliptical sealing system (140) of any preceding claim, wherein the plurality of biasing members (180) are positioned at about a 12 o'clock position and about a 6 o'clock position to bias the plurality of sealing segments (260) towards the rotor (120).

7. The elliptical sealing system (140) of any preceding claim, wherein the plurality of biasing members (180) comprises a plurality of springs (190) to bias the plurality of sealing segments (260) towards the rotor (120).

8. The elliptical sealing system (140) of any preceding claim, wherein the plurality of sealing segments (260) with the abradable coating (170) thereon comprises an interference engagement (300) when in use with the rotor (120) at about a 12 o'clock position and about a 6 o'clock position.

9. The elliptical sealing system (140) of any preceding claim, wherein the plurality of sealing segments (260) with the abradable coating (170) thereon comprises a line on line engagement (310) when in use with the rotor (120) at about a 3 o'clock position and about a 9 o'clock position.

10. The elliptical sealing system (140) of any preceding claim, wherein the plurality of sealing segments (260) with the abradable coating (170) thereon comprises a seal major axis (250) of about an outer diameter of the rotor (120) and a plurality of teeth (200) thereon.

11. The elliptical sealing system (140) of any preceding claim, wherein the rotary machine (100) comprises a compressor (110).

12. The elliptical sealing system (140) of any preceding claim, comprising:
a pair of elliptical sealing segments (270,280); and
the plurality of biasing members (180) being arranged to bias the pair of elliptical sealing segments (270,280) with the abradable coating thereon towards the rotor.

13. A rotor machine comprising:
a stator housing (130);
a rotor (120); and
an elliptical sealing system (140) according to any one of the preceding claims.

## Patentansprüche

1. Elliptisches Dichtungssystem (140) zum Gebrauch mit einem Rotor (120) und einem Statorgehäuse (130) einer Rotationsmaschine (100), umfassend:
mehrere Dichtsegmente (260);
mehrere Vorspannglieder (180) in Verbindung mit den mehreren Dichtsegmenten (260) und, im Gebrauch, mit dem Statorgehäuse (130);
wobei jedes der mehreren Dichtsegmente (260) eine zerreibbare Beschichtung (170) darauf umfasst; **dadurch gekennzeichnet, dass**
die mehreren Dichtsegmente (260) mit der zerreibbaren Beschichtung (170) darauf eine im Wesentlichen elliptische Form aufweisen.

2. Elliptisches Dichtungssystem (140) nach Anspruch 1, wobei die mehreren Dichtsegmente (260) einen Packungsring (150) umfassen.

3. Elliptisches Dichtungssystem (140) nach einem der Ansprüche 1 oder 2, wobei die mehreren Dichtsegmente (260) eine erste Hälfte (270) und eine zweite Hälfte (280) umfassen.

4. Elliptisches Dichtungssystem (140) nach einem der vorhergehenden Ansprüche, wobei der Rotor (120) mehrere Zähne (200) daran umfasst, und wobei die mehreren Zähne (200) im Gebrauch die zerreibbare Beschichtung (170) der mehreren Dichtungssegmente (260) in Eingriff nehmen.

5. Elliptisches Dichtungssystem (140) nach einem der vorhergehenden Ansprüche, wobei die mehreren Zähne (200) mehrere J-Streifen (210) umfassen und wobei die mehreren J-Streifen (210) im Gebrauch die zerreibbare Beschichtung (170) der mehreren Dichtsegmente (260) in Eingriff nehmen.

6. Elliptisches Dichtungssystem (140) nach einem der vorhergehenden Ansprüche, wobei die mehreren Vorspannglieder (180) ungefähr an einer 12-Uhr-Position und ungefähr an einer 6-Uhr-Position positioniert sind, um die mehreren Dichtsegmente (260) zum Rotor (120) hin vorzuspannen.

7. Elliptisches Dichtungssystem (140) nach einem der vorhergehenden Ansprüche, wobei die mehreren Vorspannglieder (180) mehrere Federn (190) zum Vorspannen der mehreren Dichtsegmente (260) zum Rotor (120) hin umfassen.

8. Elliptisches Dichtungssystem (140) nach einem der vorhergehenden Ansprüche, wobei die mehreren Dichtsegmente (260) mit der zerreibbaren Beschichtung (170) darauf einen Übermaßeingriff (300) aufweisen, wenn sie mit dem Rotor (120) ungefähr an einer 12-Uhr-Position und ungefähr an einer 6-Uhr-Position in Gebrauch sind.

9. Elliptisches Dichtungssystem (140) nach einem der vorhergehenden Ansprüche, wobei die mehreren Dichtsegmente (260) mit der zerreibbaren Beschichtung (170) darauf einen Linien-auf-Linien-Eingriff (310) aufweisen, wenn sie mit dem Rotor (120) ungefähr an einer 3-Uhr-Position und ungefähr an einer 9-Uhr-Position in Gebrauch sind.

10. Elliptisches Dichtungssystem (140) nach einem der vorhergehenden Ansprüche, wobei die mehreren Dichtsegmente (260) mit der zerreibbaren Beschichtung (170) darauf eine Dichtungshauptachse (250) mit ungefähr einem Außendurchmesser des Rotors (120) und mehreren Zähnen (200) daran umfassen.

11. Elliptisches Dichtungssystem (140) nach einem der vorhergehenden Ansprüche, wobei die Rotationsmaschine (100) einen Verdichter (110) umfasst.

12. Elliptisches Dichtungssystem (140) nach einem der vorhergehenden Ansprüche, umfassend:
ein Paar elliptische Dichtungssegmente (270, 280); und
die mehreren Vorspannglieder (180), die zum Vorspannen des Paars elliptischer Dichtsegmente (270, 280) mit der zerreibbaren Beschichtung darauf zum Rotor hin angeordnet sind.

13. Rotormaschine, umfassend:
ein Statorgehäuse (130);
einen Rotor (120); und
ein elliptisches Dichtungssystem (140) gemäß einem der vorhergehenden Ansprüche.

## Revendications

1. Système d'étanchéité elliptique (140) à utiliser avec un rotor (120) et un logement de stator (130) d'une machine rotative (100), comprenant :
une pluralité de segments d'étanchéité (260) ;
une pluralité d'éléments de sollicitation (180) en communication avec la pluralité de segments d'étanchéité (260) et, en fonctionnement, avec le logement de stator (130),
chaque segment de ladite pluralité de segments d'étanchéité (260) comprenant sur celui-ci un revêtement abradable (170) ; **caractérisé en ce que**
ladite pluralité de segments d'étanchéité (260) avec le revêtement abradable (170) sur ceux-ci compose une forme sensiblement elliptique (240).

2. Système d'étanchéité elliptique (140) selon la revendication 1, dans lequel la pluralité de segments d'étanchéité (260) compose un anneau de garniture (150).

3. Système d'étanchéité elliptique (140) selon la revendication 1 ou la revendication 2, dans lequel la pluralité de segments d'étanchéité (260) comprend une première moitié (270) et une seconde moitié (280).

4. Système d'étanchéité elliptique (140) selon l'une quelconque des revendications précédentes, dans lequel le rotor (120) comprend une pluralité de dents (200) sur celui-ci et dans lequel, en fonctionnement, la pluralité de dents (200) met en prise le revêtement abradable (170) de la pluralité de segments d'étanchéité (260).

5. Système d'étanchéité elliptique (140) selon l'une quelconque des revendications précédentes, dans lequel la pluralité de dents (200) comprend une pluralité de bandes J (210) et dans lequel la pluralité de bandes J (210), en fonctionnement, met en prise le revêtement abradable (170) de la pluralité de segments d'étanchéité (260).

6. Système d'étanchéité elliptique (140) selon l'une quelconque des revendications précédentes, dans lequel la pluralité d'éléments de sollicitation (180) est positionnée à environ une position à 12 heures et à environ une position à 6 heures pour solliciter la pluralité de segments d'étanchéité (260) vers le rotor (120).

7. Système d'étanchéité elliptique (140) selon l'une quelconque des revendications précédentes, dans lequel la pluralité d'éléments de sollicitation (180) comprend une pluralité de ressorts (190) pour solliciter la pluralité de segments d'étanchéité (260) vers le rotor (120).

8. Système d'étanchéité elliptique (140) selon l'une quelconque des revendications précédentes, dans lequel la pluralité de segments d'étanchéité (260) avec le revêtement abradable (170) sur ceux-ci comprend un ajustement serré (300), en fonctionnement avec le rotor (120), à environ une position à 12 heures et à environ une position à 6 heures.

9. Système d'étanchéité elliptique (140) selon l'une quelconque des revendications précédentes, dans lequel la pluralité de segments d'étanchéité (260) avec le revêtement abradable (170) sur ceux-ci comprend un ajustement ligne sur ligne (310), en fonctionnement avec le rotor (120) ; à environ une position à 3 heures et à environ une position à 9 heures.

10. Système d'étanchéité elliptique (140) selon l'une quelconque des revendications précédentes, dans lequel la pluralité de segments d'étanchéité (260) avec le revêtement abradable (170) sur ceux-ci comprend un axe principal de joint (250) d'environ un diamètre externe du rotor (120) et une pluralité de dents (200) sur celui-ci.

11. Système d'étanchéité elliptique (140) selon l'une quelconque des revendications précédentes, dans lequel la machine rotative (100) comprend un compresseur (110).

12. Système d'étanchéité elliptique (140) selon l'une quelconque des revendications précédentes, comprenant :
un couple de segments d'étanchéité elliptiques (270, 280) ; et
la pluralité d'éléments de sollicitation (180) agencée pour solliciter le couple de segments d'étanchéité elliptiques (270, 280) avec le revêtement abradable sur ceux-ci vers le rotor.

13. Machine à rotor comprenant :
un logement de stator (130) ;
un rotor (120) ; et
un système d'étanchéité elliptique (140) selon l'une quelconque des revendications précédentes.
